(19) Europäisches Patentamt
European Patent Office
Office européen des brevets

(11) **EP 2 087 311 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: **07821798.1**

(22) Anmeldetag: **24.10.2007**

(51) Int Cl.:
*G01B 11/16* (2006.01)      *G02B 6/02* (2006.01)

(86) Internationale Anmeldenummer:
**PCT/EP2007/061435**

(87) Internationale Veröffentlichungsnummer:
**WO 2008/052925 (08.05.2008 Gazette 2008/19)**

(54) **VERFAHREN ZUM HERSTELLEN EINER SENSITIVEN ZONE MIT EINER ANZAHL AN SENSITIVEN EINKERBUNGEN EINES FASEROPTISCHEN BIEGESENSORS SOWIE DAZUGEHÖRIGER FASEROPTISCHER BIEGESENSOR**

METHOD FOR PRODUCING A SENSITIVE ZONE COMPRISING A NUMBER OF SENSITIVE NOTCHES OF A FIBRE-OPTIC BENDING SENSOR, AND ASSOCIATED FIBRE-OPTIC BENDING SENSOR

PROCÉDÉ DE FABRICATION D'UNE ZONE SENSIBLE COMPORTANT UNE PLURALITÉ DE RAINURES SENSIBLES D'UN CAPTEUR DE FLEXION À FIBRES OPTIQUES ET CAPTEUR DE FLEXION À FIBRES OPTIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.11.2006 DE 102006051742**
**05.06.2007 DE 102007026225**

(43) Veröffentlichungstag der Anmeldung:
**12.08.2009 Patentblatt 2009/33**

(73) Patentinhaber: **SIEMENS AKTIENGESELLSCHAFT**
**80333 München (DE)**

(72) Erfinder:
• **GOLDBECK, Dirk David**
**81927 München (DE)**
• **HAPPEL, Tobias**
**14089 Berlin (DE)**

(56) Entgegenhaltungen:
WO-A-2006/032654      US-A- 5 097 252
US-A- 5 321 257      US-A1- 2007 071 389

## Beschreibung

Die Erfindung betrifft ein Verfahren zum Herstellen einer sensitiven Zone mit einer Anzahl an sensitiven Einkerbungen eines faseroptischen Biegesensors und einen faseroptischen Biegesensor umfassend eine sensitive Zone mit einer Anzahl an sensitiven Einkerbungen.

Es sind faseroptische Biegesensoren bekannt, die zur Vermessung von Deformationen eines unter dem Biegesensor liegenden Objekts einsetzbar sind, siehe beispielsweise US 5 097 252 oder US 5 321 257. Hierbei werden in die Faser Verletzungen derart eingefügt, dass eine Verbiegung der Faser an der Stelle der Verletzungen eine in Abhängigkeit von der Verbiegung variierende Transmissionseigenschaft von in die Faser eingekoppeltem Licht erreicht wird. Die Stelle der Faser, die die Verletzungen aufweist wird auch als sensitive Zone oder sensitives Segment bezeichnet.

Ferner ist bekannt gleichartige Verletzungen entlang des faseroptischen Biegesensors in einer sensitiven Zone aufzubringen. Dies bewirkt, dass eine Biegeempfindlichkeit im Verlauf der sensitiven Zone kontinuierlich abnimmt, z.B. von Verletzung zu Verletzung um einen konstanten Faktor. Dies ist nachteilig, da hierbei bei einem Vermessen eines Verlaufs einer Deformation, d.h. einer Biegeempfindlichkeit, im Bereich der sensitiven Zone Messfehler auftreten.

Aufgabe der vorliegenden Erfindung ist es, einen faseroptischen Biegesensor mit einer sensitiven Zone und ein Verfahren zum Herstellen der sensitiven Zone des faseroptischen Biegesensors derart auszubilden, dass eine verbesserte Biegeempfindlichkeit über einen gesamten Verlauf der sensitiven Zone erreicht wird.

Diese Aufgabe wird durch die unabhängigen Ansprüche gelöst. Weiterbildungen sind den abhängigen Ansprüchen zu entnehmen.

Die Erfindung betrifft ein Verfahren zum Herstellen einer sensitiven Zone mit einer Anzahl an sensitiven Einkerbungen eines faseroptischen Biegesensors, die sensitiven Einkerbungen derart ausgebildet werden, dass durch jede der sensitiven Einkerbungen eine identische absolute Lichtdämpfung zum Dämpfen einer in den faseroptischen Biegesensor eingestrahlten Lichtleistung erzeugt wird.

Durch dieses Verfahren wird erreicht, dass der Biegesensor im Bereich der sensitiven Zone eine gleichmäßige Biegeempfindlichkeit aufweist. Hierdurch wird ein Messergebnis durch die sensitive Zone verbessert. Im Gegensatz dazu weist bei einem Biegesensor mit einer sensitiven Zone mit identischen sensitiven Einkerbungen jede sensitive Einkerbung eine unterschiedliche Biegeempfindlichkeit auf, insbesondere nimmt hierbei die Biegeempfindlichkeit von Einkerbung zu Einkerbung ab.

Damit die an den sensitiven Einkerbungen in die Faser austretende Lichtleistung, z.B. aufgrund einer Lichtdämpfung durch das an den sensitiven Einkerbungen bei Biegung austretende Licht, über den Verlauf der sensitiven Zone, d.h. eines sensitiven Segments, annähernd gleich bleibt, muss sich die Ausprägung der sensitiven Einkerbung, z.B. in Form einer mechanischen Verletzung, antiproportional zur jeweils vor der sensitiven Zone noch in der Faser vorhandenen Lichtleistung verhalten. Nimmt die Lichtleistung über den Verlauf der sensitiven Zone in der Faser ab, so nehmen die Ausprägungen der sensitiven Einkerbungen im selben Verhältnis zu.

In einer vorzugsweisen Erweiterung des Verfahrens werden die sensitiven Einkerbungen entlang des faseroptischen Biegesensors angeordnet und eine jeweilige lokale Lichtdämpfung einer jeweiligen sensitiven Einkerbung zur Erzeugung der absoluten Lichtdämpfung bei einer vorgebbaren, insbesondere maximalen, Biegung der sensitiven Zone durch folgende Gleichung bestimmt wird:

$$LDL(i) = \frac{1 - LXR}{NSC - i * (1 - LXR)}$$

mit einer Restlichtleistung am Ausgang der letzten sensitiven Einkerbung, einem Laufindex zur Adressierung der jeweiligen sensitiven Einkerbung $SC_i$ mit $0 \leq i \leq (NSC\text{-}1)$, einer Anzahl $NSC$ an sensitiven Einkerbungen der sensitiven Zone und der dazugehörigen lokalen Lichtdämpfung $LDL_i$.

Mit Hilfe der obigen Gleichung lassen sich die lokalen Lichtdämpfungen der sensitiven Einkerbungen in einfacher Weise bestimmen. Im Allgemeinen folgen die lokalen Lichtdämpfungen einer exponentiellen Funktion.

In einer Weiterbildung wird eine jeweilige Tiefe der jeweiligen sensitiven Einkerbung der sensitiven Zone derart erzeugt, dass bei einer vorgebbaren, insbesondere maximalen, Biegung der sensitiven Zone die jeweilige sensitive Einkerbung die identische absolute Lichtdämpfung erzeugt. Durch eine Verwendung von unterschiedlichen Tiefen lassen sich die sensitiven Einkerbungen in einer Weise erzeugen.

Mit Hilfe der lokalen Lichtdämpfung können auch die benötigten Tiefen der sensitiven Einkerbungen in den Lichtleiter bestimmt werden. Die Tiefen der sensitiven Einkerbungen nehmen analog zu den lokalen Lichtdämpfungen von Einkerbung zu Einkerbung in exponentieller Weise zu, bspw. gemäß dem Prozentsatz der bestimmten lokalen Lichtdämpfung. Somit lassen sich in einfacher Weise durch die bestimmten lokalen Lichtleistungen die zu verwendenden Tiefen der sensitiven Einkerbungen bestimmen.

Ferner ist Teil der Erfindung ein faseroptischer Biegesensor umfassend umfassend eine sensitive Zone mit einer Anzahl an sensitiven Einkerbungen, die sensitiven Einkerbungen derart ausgebildet sind, dass jede der sensitiven Einkerbungen eine identische absolute Lichtdämpfung zum Dämpfen einer in den faseroptischen Biegesensor eingestrahlten Lichtleistung erzeugt. Vorzugsweise sind die sensitiven Einkerbungen entlang des faseroptischen Biegesensors angeordnet, die sensitiven Einkerbungen eine jeweilige lokale Lichtdämpfung zur Erzeugung der absoluten Lichtdämpfung bei einer vorgebbaren, insbesondere maximalen, Biegung der sensitiven Zone aufweisen, wobei diese lokalen Lichtdämpfungen durch folgende Gleichung bestimmbar sind:

$$LDL(i) = \frac{1 - LXR}{NSC - i * (1 - LXR)}$$

mit einer Restlichtleistung LXR am Ausgang der letzten sensitiven Einkerbung, einem Laufindex i zur Adressierung der jeweiligen sensitiven Einkerbung SCi mit $0 \leq i \leq (NSC\text{-}1)$, einer Anzahl NSC an sensitiven Einkerbungen der sensitiven Zone und der dazugehörigen lokalen Lichtdämpfung LDLi.

Zudem können die sensitiven Einkerbungen eine jeweilige Tiefe aufweisen, wobei die jeweiligen Tiefen derart ausgestaltet sind, dass sie bei einer vorgebbaren, insbesondere maximalen, Biegung der sensitiven Zone die jeweilige sensitive Einkerbung die identische absolute Lichtdämpfung erzeugen.

Dieser faseroptische Biegesensor weist dieselben Vorteile wie das dazugehörige Verfahren zur Herstellung auf.

Die Erfindung und ihre Weiterbildungen werden nachfolgend anhand von Zeichnungen näher erläutert. Es zeigen:

Figur 1      Faseroptischer Biegesensor mit einer sensitiven Zo- ne mit fünf sensitiven Einkerbungen;

Figur 2      Grafische Darstellung einer über einen Verlauf ei- ner sensitiven Zone sich verändernde lokale Licht- dämpfung und sich verändernde Tiefe jeweiliger sen- sitiver Einkerbungen.

Elemente mit gleicher Funktion und Wirkungsweise sind in den Figuren mit denselben Bezugszeichen versehen.

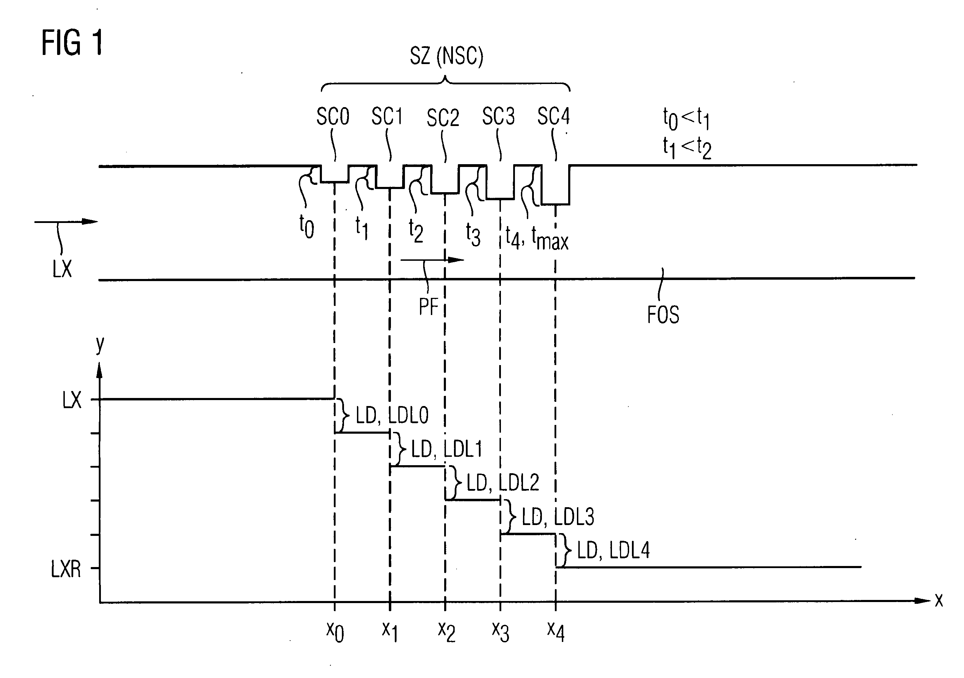

In einem ersten Ausführungsbeispiel gemäß Figur 1 soll mit einer Anzahl NSC von fünf, d.h. NSC=5, sensitiven Einkerbungen SC0, ..., SC4 einer sensitiven Zone SZ eines faseroptischen Biegesensors FOS eine über die sensitive Zone SZ konstante Biegeempfindlichkeit erreicht werden. In Figur 1 sind die sensitiven Einkerbungen SC0, ..., SC4 entlang des faseroptischen Biegesensors FOS angeordnet. Hierbei werden die einzelnen sensitiven Einkerbungen SC0, ..., SC4 derart ausgebildet, dass durch jede sensitive Einkerbung SC0, ..., SC4 jeweils eine in etwa identische absolute Lichtdämpfung LD zum Dämpfen einer in den faseroptischen Biegesensor FOS eingestrahlten Lichtleistung LX erzeugt werden.

Im vorliegenden Beispiel soll die eingestrahlte Lichtleistung LX, welche 100% entspricht, durch jede sensitive Einkerbung um denselben Betrag, z.B. um 20%, bezogen auf die eingestrahlte Lichtleistung gedämpft werden.

Die jeweilige lokale Lichtdämpfung LDL0, ..., LDL4 gibt an, welcher Prozentsatz einer in die jeweilige sensitive Einkerbung SC0, ..., SC4 eingestrahlten Lichtleistungen durch die jeweilige sensitive Einkerbung SC0, ..., SC4 gedämpft wird, du zwar bei einer vorgebbaren Biegung der Faser an der sensitiven Zone SZ, z.B. bei einer maximalen Biegung bevor die Faser bricht oder bei Erreichen eines vorgebbaren Biegewinkels oder Biegeradius. Da die in die jeweilige sensitive Einkerbung SC0, ..., SC4 eingestrahlte Lichtleistung von sensitiver Einkerbung zu sensitiver Einkerbung abnimmt, symbolisch durch einen Pfeil mit einem Bezugszeichen PF in Figur 1 angezeigt, muss zum Erreichen einer identischen absoluten Lichtdämpfung LD durch jede sensitive Einkerbung die lokale Lichtdämpfung von sensitiver Einkerbung SC2 zu sensitiver Einkerbung SC3 zunehmen.

Die absolute Lichtdämpfung LD gibt an, welcher Prozentsatz der in die Faser eingestrahlte Lichtleistung bzw. Lichts durch die jeweilige sensitive Einkerbung gedämpft werden soll. So bedeutet bspw. absolute Lichtdämpfung LD=20%, dass durch eine jeweilige Einkerbung 20% der in die Faser eingestrahlten Lichtleistung LX gedämpft werden soll.

In einer unteren Hälfte der Figur 1 ist auf einer Abszisse x eine örtliche Position x0, ..., x4 der jeweiligen sensitiven Einkerbung SC0, ..., SC4 zu sehen. Auf einer Ordinate y ist ein Verlauf einer Lichtleistung über der sensitiven Zone SZ abgebildet, wobei an jeder örtlichen Position der jeweiligen sensitiven Einkerbung die identische absolute Lichtdämpfung LD durch die jeweilige lokale Lichtdämpfung LDL0, ..., LDL4 gedämpft wird. Nach Austritt des Lichtstrahls aus der letzten sensitiven Einkerbung hat der Lichtstrahl die Restlichtleistung LXR.

Die jeweiligen lokalen Lichtdämpfungen LDL(i) sind durch folgende Gleichung bestimmbar:

$$LDL(i) = \frac{1 - LXR}{NSC - i * (1 - LXR)} \qquad (1)$$

mit der Restlichtleistung LXR am Ausgang der letzten sensitiven Einkerbung, z.B. SC4, und einem Laufindex i zur Adressierung der jeweiligen sensitiven Einkerbung SCi von Null kleiner gleich i kleiner gleich NSC minus 1, d.h. $0 \leq i \leq$ (NSC-1), und der dazugehörigen lokalen Lichtdämpfung LDLi. Die Restlichtleistung LXR in diesem Beispiel Null LXR=0 sein. Somit ergeben sich die lokalen Lichtdämpfungen LDL0 zu:

| sensitive Einkerbung | lokale Lichtdämpfung |
|---|---|
| SC0 | LDL0 = 0,2 |
| SC1 | LDL1 = 0,25 |
| SC2 | LDL2 = 0,33 |
| SC3 | LDL3 = 0,5 |
| SC4 | LDL4 = 1 |

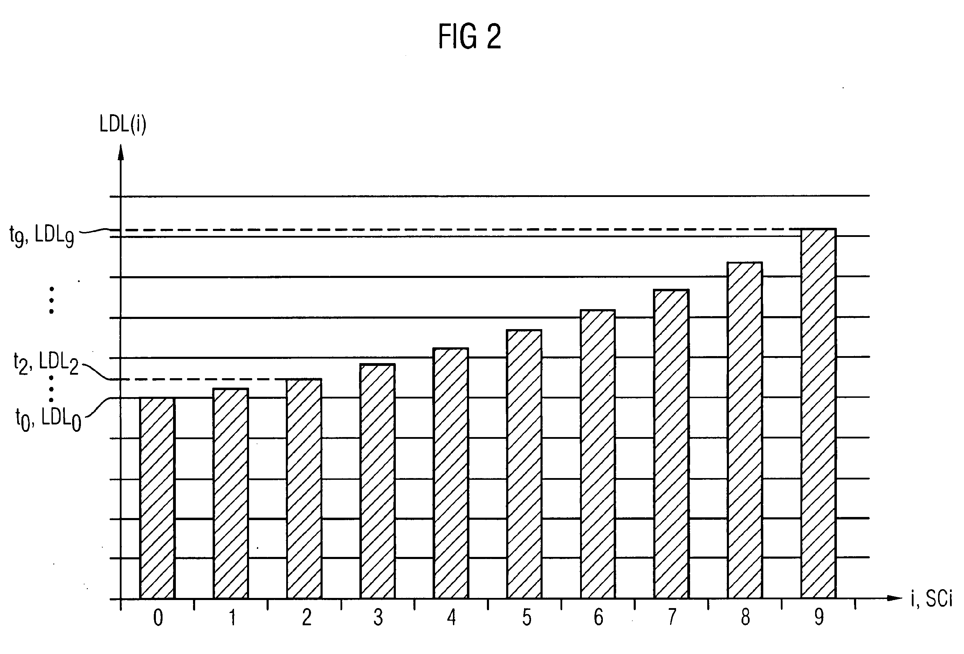

Wobei ein jeweiliger Wert für die lokale Lichtdämpfung LDLi größer gleich Null und kleiner gleich Eins ist, d.h. $0 \leq LDL \leq 1$. Ein Wert Null bedeutet keine Lichtdämpfung und ein Wert Eins repräsentiert eine maximale Lichtdämpfung. Im Allgemeinen gibt die lokale Lichtdämpfung an, welcher Prozentsatz der in die jeweilige sensitive Einkerbung eingestrahlte Lichtleistung durch diese bei einer vorgebbaren Biegung, bspw. einer maximalen Biegung, gedämpft wird.
Die jeweiligen lokalen Lichtdämpfungen können bspw. durch unterschiedlich tiefe Einkerbungen in den jeweiligen sensitiven Einkerbungen eingestellt werden. In Figur 1 ist dies bildhaft dargestellt, wobei die sensitive Einkerbung SC0 eine geringste Tiefe t0 und die letzte sensitive Einkerbung SC4 die größte Tiefe t4 aufweist. Die expliziten Tiefen hängen von einem verwendeten Fasermaterial ab, wobei bspw. eine größere lokale Lichtdämpfung bei einer größeren Tiefe erzielt wird. Die sensitive Einkerbung wird bspw. durch Herausnahme von Fasermaterial aus der optischen Faser erzielt, wie beispielsweise in [1] erläutert ist. Die lokale Lichtdämpfung LDL0, ..., LDL4 wird dabei beispielweise durch eine Tiefe und/oder Breite der jeweiligen sensitiven Einkerbung erzeugt. So ist bspw. die lokale Lichtdämpfung größer, je tiefer und/oder breiter die jeweilige sensitive Einkerbung ist. In einer alternativen Ausführungsform kann die sensitive Einkerbung mit einem Material ausgefüllt werden, welches in Abhängigkeit von der benötigten lokalen Lichtdämpfung ausgewählt wird. Dabei ist das Material bspw. für Lichtstrahlen umso reflexiver, je geringer die jeweilige lokale Dämpfung sein soll. Entsprichen 100% einer jeweiligen lokalen Lichtdämpfung bspw. einer maximalen Tiefe tmax, so kann die jeweilige Tiefe einer der sensitiven Einkerbungen durch Multiplikation der maximalen Tiefe tmax mal der lokalen Licht-dämpfung ermittelt werden. Beispielsweise ist die lokale Lichtdämpfung LDL3 = 0,2 der sensitiven Einkerbung SC3. Hieraus ergibt sich die zu verwendende Tiefe t3 der lokalen Einkerbung SC3 zu t3 = tmax * LDL3. Diese Vorgehensweise ist auf die weiteren sensitiven Einkerbungen in analoger Weise anwendbar. Somit nehmen die Tiefen t0, ..., t4 der jeweiligen sensitiven Einkerbungen SC0, ..., SC4 von Einkerbung zu Einkerbung zu, d.h. t0<t1, t1<t2, ... t3<t4. Zudem kann die Tiefe t4=tmax sein. In Figur 2 sind die Tiefen t0, ..., t9 der jeweiligen sensitiven Einkerbungen SCi mit i=0 bis 9 bildhaft dargestellt, wobei sich die exponentielle Zunahme der Tiefe im Bereich der sensitiven Einkerbungen zeigt.
In einem weiteren Beispiel sollen NSC=10 lokale Lichtdämpfungen LDL0, ..., LDL9 für zehn sensitive Einkerbungen SC0, ..., SC9 ermittelt werden, wobei nach der Dämpfung durch die letzte sensitive Einkerbung SC9 noch 50% des in die optische Faser bzw. Biegesensors FOS eingekoppelten Lichts bei einer maximalen Biegung der sensitiven Zone zur Verfügung stehen sollen, d.h. LXR = 0,5. Nach Anwendung der Gleichung (1) ergibt sich:

| sensitive Einkerbung | lokale Lichtdämpfung |
|---|---|
| SC0 | LDL0 = 5% |
| SC1 | LDL1 = 5,3% |
| SC2 | LDL2 = 5,6% |
| SC3 | LDL3 = 5,9% |
| SC4 | LDL4 = 6,3% |
| SC5 | LDL5 = 6,7% |
| SC6 | LDL6 = 7,1% |
| SC7 | LDL7 = 7,7% |
| SC8 | LDL8 = 8,3% |

(fortgesetzt)

| sensitive Einkerbung | lokale Lichtdämpfung |
|---|---|
| SC9 | LDL9 = 9,1% |

In Figur 2 sind die lokalen Lichtdämpfungen LDL0, ..., LDL9 und die dazugehörigen Tiefen t0, ..., t9 der jeweiligen sensitiven Einkerbungen abgebildet.

**Patentansprüche**

1. Verfahren zum Herstellen einer sensitiven Zone (SZ) mit einer Anzahl (NSC) an sensitiven Einkerbungen (SC0, ..., SC4) eines faseroptischen Biegesensors (FOS),
**dadurch gekennzeichnet, dass**
die sensitiven Einkerbungen (SC0, ..., SC4) derart ausgebildet werden, dass durch jede der sensitiven Einkerbungen (SC0, ..., SC4) eine identische absolute Lichtdämpfung (LD) zum Dämpfen einer in den faseroptischen Biegesensor (FOS) eingestrahlten Lichtleistung (LX) erzeugt wird.

2. Verfahren nach Anspruch 1,
**dadurch gekennzeichnet, dass**
die sensitiven Einkerbungen (SC0, ..., SC4) entlang des faseroptischen Biegesensors (FOS) angeordnet werden, eine jeweilige lokale Lichtdämpfung (LDLO, ..., LDL4) einer jeweiligen sensitiven Einkerbung (SC0, ..., SC4) zur Erzeugung der absoluten Lichtdämpfung (LD) bei einer vorgebbaren, insbesondere maximalen, Biegung der sensitiven Zone (SZ) durch folgende Gleichung bestimmt wird:

$$LDL(i) = \frac{1 - LXR}{NSC - i * (1 - LXR)}$$

mit einer Restlichtleistung (LXR) am Ausgang der letzten sensitiven Einkerbung (SC4), einem Laufindex (i) zur Adressierung der jeweiligen sensitiven Einkerbung (SCi) mit $0 \leq i \leq (NSC\text{-}1)$ und der dazugehörigen lokalen Lichtdämpfung (LDLi).

3. Verfahren nach einem der Ansprüche 1 oder 2,
**dadurch gekennzeichnet, dass**
eine jeweilige Tiefe (t0, ..., t4) der jeweiligen sensitiven Einkerbung (SC0, ..., SC4) der sensitiven Zone (SZ) derart erzeugt wird, dass bei einer vorgebbaren, insbesondere maximalen, Biegung der sensitiven Zone (SZ) die jeweilige sensitive Einkerbung (SC0, ..., SC4) die identische absolute Lichtdämpfung (LD) erzeugt.

4. Faseroptischer Biegesensor (FOS) umfassend eine sensitive Zone (SZ) mit einer Anzahl (NSC) an sensitiven Einkerbungen (SC0, ..., SC4),
**dadurch gekennzeichnet, dass**
die sensitiven Einkerbungen (SC0, ..., SC4) derart ausgebildet sind, dass jede der sensitiven Einkerbungen (SC0, ..., SC4) eine identische absolute Lichtdämpfung (LD) zum Dämpfen einer in den faseroptischen Biegesensor (FOS) eingestrahlten Lichtleistung (LX) erzeugt.

5. Faseroptischer Biegesensor (FOS) nach Anspruch 4,
**dadurch gekennzeichnet, dass**
die sensitiven Einkerbungen (SC0, ..., SC4) entlang des faseroptischen Biegesensors (FOS) angeordnet sind, die sensitiven Einkerbungen (SC0, ..., SC4) eine jeweilige lokale Lichtdämpfung (LDLO, ..., LDL4) zur Erzeugung der absoluten Lichtdämpfung (LD) bei einer vorgebbaren, insbesondere maximalen, Biegung der sensitiven Zone (SZ) aufweisen, wobei diese lokalen Lichtdämpfungen (LDLO, ..., LDL4) durch folgende Gleichung bestimmbar sind:

$$LDL(i) = \frac{1 - LXR}{NSC - i * (1 - LXR)}$$

mit einer Restlichtleistung (LXR) am Ausgang der letzten sensitiven Einkerbung (SC4), einem Laufindex (i) zur Adressierung der jeweiligen sensitiven Einkerbung (SCi) mit $0 \leq i \leq (NSC\text{-}1)$ und der dazugehörigen lokalen Licht-dämpfung (LDLi).

6. Faseroptischer Biegesensor (FOS) nach einem der Ansprüche 4 oder 5,
   **dadurch gekennzeichnet, dass**
   die sensitiven Einkerbungen (SC0, ..., SC4) eine jeweilige Tiefe (t0, ..., t4) aufweisen, wobei die jeweiligen Tiefen (t0, ..., t4) derart ausgestaltet sind, dass sie bei einer vorgebbaren, insbesondere maximalen, Biegung der sensitiven Zone (SZ) die jeweilige sensitive Einkerbung (SC0, ..., SC4) die identische absolute Lichtdämpfung (LD) erzeugen.

**Claims**

1. Method for producing a sensitive zone (SZ) comprising a number (NSC) of sensitive notches (SC0,...,SC4) of a fibre-optic bending sensor (FOS)
   **characterised in that**
   the sensitive notches (SC0,...,SC4) are embodied in such a way that each one generates an identical absolute light attenuation (LD) for attenuating light output (LX) irradiated into the fibre-optic bending sensor (FOS).

2. Method according to claim 1,
   **characterised in that**
   the sensitive notches (SC0,...,SC4) are arranged along the fiber-optic bending sensor (FOS), a respective local light attenuation (LDL0,...,LDL4) of a respective sensitive notch (SC0,...,SC4) for generating the absolute light attenuation (LD) with a predeterminable, in particular maximum bending of the sensitive zone (SZ) is determined by the following equation:

$$LDL(i) = \frac{1 - LXR}{NSC - i * (1 - LXR)}$$

with a residual light output (LXR) at the output of the last sensitive notch (SC4), a continuous index (i) for addressing the respective sensitive notch (SCi) with $0 \leq i \leq (NSC\text{-}1)$ and the local light attenuation (LDLi) associated therewith.

3. Method according to one of claims 1 or 2,
   **characterised in that**
   a respective depth (t0, ..., t4) of the respective sensitive notch (SCO,...,SC4) of the sensitive zone (SZ) is generated in such a way that with a predeterminable, in particular maximum bending of the sensitive zone (SZ), the respective sensitive notch (SC0,..., SC4) generates the identical absolute light attenuation (LD).

4. Fiber-optic bending sensor (FOS) comprising a sensitive zone (SZ) with a number (NSC) of sensitive notches (SC0,...SC4),
   **characterised in that**
   the sensitive notches (SC0,...,SC4) are embodied in such a way that each one generates an identical absolute light attenuation (LD) for attenuating light output (LX) irradiated into the fibre-optic bending sensor (FOS).

5. Fiber-optic bending sensor (FOS) according to claim 4,
   **characterised in that**
   the sensitive notches (SC0,...,SC4) are arranged along the fiber-optic bending sensor (FOS),
   the sensitive notches (SC0, ... SC4) comprise a respective local light attenuation (LDLO, ..., LDL4) for generating the absolute light attenuation (LD) in a predeterminable, in particular maximum bending of the sensitive zone (SZ), with these local light attenuations (LDLO, ..., LDL4) being determinable by the following equation:

$$LDL(i) = \frac{1 - LXR}{NSC - i * (1 - LXR)}$$

with a residual light output (LXR) at the output of the last sensitive notch (SC4), a continuous index (i) for addressing the respective sensitive notch (SCi) with $0 \leq i \leq (NSC\text{-}1)$ and the local light attenuation (LDLi) associated therewith.

6. Fiber-optic bending sensor (FOS) according to one of claims 4 or 5,
**characterised in that**
the sensitive notches (SC0, ..., SC4) comprise a respective depth (t0,..., t4), with the respective depths (t0,..., t4) being embodied in such a way that with a predeterminable, in particular maximum bending of the sensitive zone (SZ), the respective sensitive notch (SC0,..., SC4) generates the identical absolute light attenuation (LD).

**Revendications**

1. Procédé pour la fabrication d'une zone sensible (SZ) comportant une pluralité (NSC) de rainures sensibles (SC0, ..., SC4) d'un capteur de flexions (FOS) à fibres optiques,
**caractérisé en ce que**
les rainures sensibles (SC0, ..., SC4) sont réalisées de telle sorte que, par chacune des rainures sensibles (SC0, ..., SC4), une atténuation de lumière absolue (LD) identique est générée pour l'atténuation d'une puissance lumineuse (LX) envoyée dans le capteur de flexions (FOS) à fibres optiques.

2. Procédé selon la revendication 1,
**caractérisé en ce que**
les rainures sensibles (SC0, ..., SC4) sont disposées le long du capteur de flexions (FOS) à fibres optiques, une atténuation de lumière locale (LDL0, ..., LDL4) respective d'une rainure sensible (SC0, ..., SC4) respective pour générer l'atténuation de lumière absolue (LD) pour une flexion prédéfinissable, en particulier maximale, de la zone sensible (SZ) est déterminée par l'équation suivante :

$$LDL(i) = \frac{1 - LXR}{NSC - i * (1 - LXR)}$$

avec une puissance de lumière résiduelle (LXR) à la sortie de la dernière rainure sensible (SC4), un indice courant (i) pour l'adressage de la rainure sensible (SCi) respective avec $0 \leq i \leq (NSC - 1)$ et de l'atténuation de lumière locale (LDLi) correspondante.

3. Procédé selon l'une quelconque des revendications 1 ou 2,
**caractérisé en ce que**
une profondeur (t0, ..., t4) respective de la rainure sensible (SC0, ..., SC4) respective de la zone sensible (SZ) est générée de telle sorte que, avec une flexion prédéfinissable, en particulier maximale, de la zone sensible (SZ), la rainure sensible (SC0, ..., SC4) respective génère l'atténuation de lumière absolue (LD) identique.

4. Capteur de flexions à fibres optiques (FOS) comprenant une zone sensible (SZ) avec une pluralité (NSC) de rainures sensibles (SC0, ..., SC4),
**caractérisé en ce que**
les rainures sensibles (SC0, ..., SC4) sont conçues de telle sorte que chacune des rainures sensibles (SC0, ..., SC4) génère une atténuation de lumière absolue (LD) identique pour l'atténuation d'une puissance de lumière (LX) envoyée dans le capteur de flexions à fibres optiques (FOS).

5. Capteur de flexions à fibres optiques (FOS) selon la revendication 4,

**caractérisé en ce que**
les rainures sensibles (SC0, ..., SC4) sont disposées le long du capteur de flexions à fibres optiques (FOS),
les rainures sensibles (SC0, ..., SC4) présentent une atténuation de lumière locale (LDL0, ..., LDL4) respective pour générer l'atténuation de lumière absolue (LD) pour une flexion prédéfinissable, en particulier maximale, de la zone sensible (SZ), ces atténuations de lumière locales (LDL0, ..., LDL4) pouvant être déterminées par l'équation suivante :

$$LDL(i) = \frac{1 - LXR}{NSC - i * (1 - LXR)}$$

avec une puissance de lumière résiduelle (LXR) à la sortie de la dernière rainure sensible (SC4), un indice courant (i) pour l'adressage de la rainure sensible (SCi) respective avec $0 \leq i \leq (NSC - 1)$ et de l'atténuation de lumière locale (LDLi) correspondante.

6. Capteur de flexions à fibres optiques (FOS) selon l'une quelconque des revendications 4 ou 5,
   **caractérisé en ce que**
   les rainures sensibles (SC0, ..., SC4) présentent une profondeur respective (t0, ..., t4), les profondeurs respectives (t0, ..., t4) étant conçues de telle sorte que, pour une flexion prédéfinissable, en particulier maximale, de la zone sensible (SZ) la rainure sensible (SC0, ..., SC4) respective génère l'atténuation de lumière absolue (LD) identique.

## FIG 1

SZ (NSC)

SC0   SC1   SC2   SC3   SC4

$t_0 < t_1$
$t_1 < t_2$

$t_0$   $t_1$   $t_2$   $t_3$   $t_4, t_{max}$

LX

PF

FOS

y

LX

$\}$ LD, LDL0

$\}$ LD, LDL1

$\}$ LD, LDL2

$\}$ LD, LDL3

$\}$ LD, LDL4

LXR

x

$x_0$   $x_1$   $x_2$   $x_3$   $x_4$

EP 2 087 311 B1

# FIG 2

EP 2 087 311 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5097252 A

- US 5321257 A